# EUROPEAN PATENT SPECIFICATION

(11) **EP 3 265 426 B1**
(45) Date of publication and mention of the grant of the patent: **02.12.2026**
(21) Application number: 16759277.3
(22) Date of filing: 24.02.2016
(51) Int. Cl.: B01J 29/40, C01B 39/48

(54) **HIGH SURFACE AREA PENTASIL ZEOLITE AND PROCESS FOR MAKING SAME**
PENTASILZEOLITH MIT GROSSER OBERFLÄCHE UND VERFAHREN ZUR HERSTELLUNG DAVON
PENTASIL ZÉOLITE À SURFACE ACTIVE ÉLEVÉE ET PROCÉDÉ PERMETTANT DE LA FABRIQUER

(30) Priority: 03.03.2015 US 201514636898
(43) Date of publication of application: 10.01.2018
(73) Proprietor: UOP LLC, Rosemont, Illinois 60018 (US)
(72) Inventor: MOSCOSO, Jaime G., Des Plaines, Illinois 60017-5017 (US); JAN, Deng-Yang, Des Plaines, Illinois 60017-5017 (US)
(74) Representative: Boult Wade Tennant LLP
(86) International application number: PCT/US2016/019221
(87) International publication number: WO 2016/140838

(56) References cited:
- EP-A1- 0 018 090
- WO-A1-2005/030909
- WO-A1-2005/113439
- US-A- 3 709 979
- US-A1- 2013 059 722
- US-B2- 7 578 993

## Description

This application claims priority to U.S. Application No. 14/636898 which was filed March 3, 2015,

### FIELD OF THE INVENTION

The present invention relates to a new family of aluminosilicate zeolites. This family of zeolites are pentasil zeolites similar to MFI type zeolites, and is characterized by unique x-ray diffraction patterns and compositions and have catalytic properties for carrying out various hydrocarbon conversion processes.

### BACKGROUND

Zeolites are crystalline aluminosilicate compositions which are microporous and which are formed from corner sharing AlO₂ and SiO₂ tetrahedra. Numerous zeolites, both naturally occurring and synthetically prepared, are used in various industrial processes. Synthetic zeolites are prepared via hydrothermal synthesis employing suitable sources of Si, Al and structure directing agents such as alkali metals, alkaline earth metals, amines, or organoammonium cations. The structure directing agents reside in the pores of the zeolite and are largely responsible for the particular structure that is ultimately formed. These species balance the framework charge associated with aluminum and can also serve as space fillers. Zeolites are characterized by having pore openings of uniform dimensions, having a significant ion exchange capacity, and being capable of reversibly desorbing an adsorbed phase which is dispersed throughout the internal voids of the crystal without significantly displacing any atoms which make up the permanent zeolite crystal structure. Zeolites can be used as catalysts for hydrocarbon conversion reactions, which can take place on outside surfaces as well as on internal surfaces within the pore.

One particular zeolitic material, classified as ZSM-5, is disclosed in Beck, et al., U.S. Patent No. 6,180,550, issued on Jan. 30, 2001. The zeolite comprises a synthetic porous crystalline material having a composition involving the molar relationship

X₂O₃:(n)YO₂,

wherein X is a trivalent element, such as aluminum, boron, iron and/or gallium, preferably aluminum; Y is a tetravalent element such as silicon and/or germanium, preferably silicon; and n is less than 25, and Wherein the slope of the nitrogen sorption isotherm of the material at a partial pressure of nitrogen of 0.4 to 0.7 and a temperature of 77° K is greater than 30.

US 3 709 979 A is directed to a pentasil zeolite characterized by the XRD pattern set forth in Table 1. This document is silent as to the mesoporous surface area of the pentasil zeolite after calcination.

While there are many types of zeolites, new zeolites provide for improved reaction conditions in the conversion of lower value hydrocarbon streams to higher value hydrocarbon products.

### SUMMARY

The present invention comprises a pentasil-layered zeolite having a microporous crystalline structure comprising a framework of AlO₂ and SiO₂ tetrahedral units, and an empirical composition in the as synthesized and anhydrous basis expressed by the empirical formula of Mₘⁿ⁺R ᵣ^{p+}AlSi_{y}O_{z} where M is at least one exchangeable cation selected from the group consisting of alkali and alkaline earth metals, "m" is the mole ratio of M to Al and varies from 0 to 3, R is at least one organo cation selected from the group consisting of quaternary ammonium cations, diquaternary ammonium cations, quaternary phosphonium cations, and methonium cations, "r" is the mole ratio of R to Al and has a value of 0.1 to 30, "n" is the weight average valence of M and has a value of 1 to 2, "p" is the weighted average valence of R and has a value of 1 to 2, "y" is the mole ratio of Si to Al and varies from greater than 32 to 200 and "z" is the mole ratio of O to Al and has a value determined by the equation z=(m·n+r·p+3+4·y)/2. The pentasil-layered zeolite of the invention is characterized by the x-ray diffraction pattern having at least the d spacing and intensities set forth in the following Table A

**Table A**

| **2Θ** | **d(Å)** | **I/Io** |
|---|---|---|
| 7.92-7.99 | 11.04-11.31 | m |
| 8.79-8.88 | 9.94-11.09 | m |
| 20.28-20.56 | 4.31-4.35 | w |
| 23.10-23.18 | 3.83-3.84 | vs |
| 23.86-24.05 | 3.69-3.72 | m |
| 29.90-30.05 | 2.97-2.98 | w |
| 45.02-45.17 | 2.00-2.01 | w |

An embodiment of the invention is one, any or all of prior embodiments in this paragraph up through the first embodiment in this paragraph wherein the zeolite has a microporous crystalline structure comprising a framework of AlO₂ and SiO₂ tetrahedral units, further including the element E and having the empirical composition in the as synthesized and anhydrous basis expressed by the empirical formula of Mₘⁿ⁺Rᵣ^{p+} Al₁₋ₓEₓSi_{y}O_{z} where "m" is the mole ratio of M to (Al+E) and varies from 0 to 3, "r" is the mole ratio of R to (Al+E) and has a value between 0.1 and 30, E is an element selected from the group consisting of gallium, iron, boron, indium and mixtures thereof, "x" is the mole fraction of E and has a value from 0 to 1.0, "y" is the mole ratio of Si to (Al+E) and varies from greater than 32 to 200 and "z" is the mole ratio of O to (Al+E) and has a value determined by the equation z=(m·n+r·p+3+4·y)/2. The zeolite, after calcination by ramping at 560°C for 5 hours followed by an 8 hours dwell in air, forms a porous structure having a has a mesopore surface area between 140 m²/g and 400 m²/g. An embodiment of the invention is one, any or all of prior embodiments in this paragraph up through the first embodiment in this paragraph wherein M is selected from the group consisting of lithium, sodium, potassium, and mixtures thereof. An embodiment of the invention is one, any or all of prior embodiments in this paragraph up through the first embodiment in this paragraph wherein M is a mixture of an alkali metal and an alkaline earth metal. An embodiment of the invention is one, any or all of prior embodiments in this paragraph up through the first embodiment in this paragraph wherein R is selected from the group consisting of where R is selected from the group consisting of tetrabutylammonium hydroxide, tetrabutylphosphonium hydroxide, hexamethonium dihydroxide and mixtures thereof. An embodiment of the invention is one, any or all of prior embodiments in this paragraph up through the first embodiment in this paragraph wherein R is a halide or hydroxide compound of an organoammonium cation. An embodiment of the invention is one, any or all of prior embodiments in this paragraph up through the first embodiment in this paragraph wherein R is a mixture of tetrabutylammonium cation and a quaternary ammonium cation. An embodiment of the invention is one, any or all of prior embodiments in this paragraph up through the first embodiment in this paragraph wherein the silica/alumina (Si/Al₂) ratio is between 32 and 400.

Disclosed is a process for the production of a pentasil-layered zeolite catalyst, comprising forming a reaction mixture comprising reactive compounds M, R, Al and Si; and reacting the mixture at reaction conditions, wherein the reaction conditions include a temperature between 80°C and 150°C, and a reaction time between 10 hours and 5 days, to form a microporous crystalline structure comprising a framework of AlO₂ and SiO₂ tetrahedral units, and an empirical composition in the as synthesized and anhydrous basis expressed by the empirical formula of Mₘⁿ⁺Rᵣ^{p+}AlSi_{y}O_{z}; wherein the reactive compounds include M, a cation selected from the group consisting of alkali and alkaline earth metals; R, an organoammonium cation selected from the group consisting of quaternary ammonium cations, diquaternary ammonium cations; and wherein "m" is the mole ratio of M to Al and varies from 0 to 3, "r" is the mole ratio of R to Al and has a value of between 0.1 and 30, "n" is the weight average valence of M and has a value of 1 to 2, "p" is the weighted average valence of R and has a value of 1 to 2, "y" is the mole ratio of Si to Al and varies from greater than 32 to 200 and "z" is the mole ratio of O to Al and has a value determined by the equation z=(m·n+r·p+3+4·y)/2. An embodiment is one, any or all of prior embodiments in this paragraph up through this embodiment in this paragraph further comprising the addition of reactive source E, wherein E is an element selected from the group consisting of gallium, iron, boron, indium and mixtures thereof, to form a microporous crystalline structure comprising a framework of AlO₂ and SiO₂ tetrahedral units, and an empirical composition in the as synthesized and anhydrous basis expressed by the empirical formula of Mₘⁿ⁺Rᵣ^{p+}Al₁₋ₓEₓSi_{y}O_{z}; wherein m" is the mole ratio of M to (Al+E) and varies from 0 to 1, "r" is the mole ratio of R to (Al+E) and has a value between 0.1 and 30, "n" is the weight average valence of M and has a value of 1 to 2, "p" is the weighted average valence of R and has a value of 1 to 2, "x" is the mole fraction of E and has a value from 0 to 1.0, "y" is the mole ratio of Si to (Al+E) and varies from greater than 32 to 200 and "z" is the mole ratio of O to (Al+E) and has a value determined by the equation z=(m·n+r·p+3+4·y)/2. An embodiment is one, any or all of prior embodiments in this paragraph up through this embodiment in this paragraph where R is selected from the group consisting of tetrabutylammonium hydroxide, tetrabutylphosphonium hydroxide and mixtures thereof. An embodiment is one, any or all of prior embodiments in this paragraph up through this embodiment in this paragraph wherein R is a halide or hydroxide compound of an organoammonium cation. An embodiment is one, any or all of prior embodiments in this paragraph up through this embodiment in this paragraph where R is a mixture of tetrabutylammonium hydroxide and a quaternary ammonium cation. An embodiment is one, any or all of prior embodiments in this paragraph up through this embodiment in this paragraph where M is selected from the group consisting of sodium, potassium, and mixtures thereof. An embodiment is one, any or all of prior embodiments in this paragraph up through this embodiment in this paragraph where the reaction mixture is reacted at a temperature between 100°C and 125°C. An embodiment is one, any or all of prior embodiments in this paragraph up through this embodiment in this paragraph where the reaction mixture is reacted at a temperature between 110°C and 150°C.

Another, or second embodiment of the process of making the zeolite, is a process for the production of a pentasil MFI/MEL-layered zeolite catalyst having a 2-D structure, comprising forming a reaction mixture containing reactive sources of M, R, Al, and Si; and reacting the reaction mixture at reaction conditions of 80°C to 150°C for a period of time of between 10 hours and 5 days the reaction mixture having the a composition expressed in terms of mole ratios of the oxides of aM_{2/n}ObR_{1 2/n}OcR_{2 2/n}Al₂O₃eSiO₂hH₂O; wherein the reactive compounds include M, a cation selected from the group consisting of alkali, alkaline earth metals and mixtures thereof; R, an organoammonium cation selected from the group consisting of quaternary ammonium cations, diquaternary ammonium cations and mixtures thereof; Al in the form of Al₂O₃; and Si in the form of SiO₂; and wherein "a" has a value of 0.1 to 3, "b" has a value of 1 to 30, "c" has a value of 0 to 1, "e" has a value of 64 to 400 and "h" has a value of 50 to 1000. An embodiment is one, any or all of prior embodiments in this paragraph up through the second embodiment in this paragraph further comprising forming the reaction mixture with reactive source E, wherein E is an element selected from the group consisting of gallium, iron, boron, indium and mixtures thereof; and reacting the reaction mixture at reaction conditions of 85°C to 225°C for a period of time of 1 day to 15 days the reaction mixture having the a composition expressed in terms of mole ratios of the oxides of aM_{2/n}ObR_{1 2/n}OcR_{2 2/n}1-dAl₂O₃dE₂O₃eSiO₂hH₂O; wherein "a" has a value of 0.1 to 3, "b" has a value of 1 to 30, "c" has a value of 0 to 1, "d" has a value of 0 to 1, "e" has a value of 64 to 400 and "h" has a value of 50 to 1000.

Other objects, advantages and applications of the present invention will become apparent to those skilled in the art from the following detailed description.

### DETAILED DESCRIPTION

A new family of zeolitic materials has been successfully prepared. The topology of this zeolite is unique as determined by its x-ray diffraction spectrum. The structure is related to MFI/MEL class of zeolite framework types.

There are many allotropes for zeolites having similar chemical formulae. The different allotropes can have very different physical and chemical properties, and can lead to many different uses. The easiest example is to look at the allotropes of carbon, a single type of atom but with many different structures, that leads to materials having, in some cases, diametrically opposed properties. Likewise for the allotropes of many zeolites, the discovery of new allotropes can be unexpected and their properties can also be unexpected and subsequently can lead to new uses from those properties.

For industrial catalytic application there is a need for zeolite of high external surface areas. Applicants have successfully prepared this new family of pentasil zeolites similar to MFI/MEL type zeolites. The materials are prepared via the use of a single commercially available structure directing agent, such as tetrabutylammonium hydroxide, using the Charge Density Mismatch Approach to zeolite synthesis (U.S. Pat. No. 7,578,993). The organoammonium compounds used to make this pentasil zeolite are non-cyclic or contain cyclic substituents and are generally quite simple. Examples of organoammonium compounds used to make this pentasil zeolite include tetrabutylammonium (TBA) and tetrabutylphosphonium (TBP) cation

The present invention is a new pentasil layer zeolite and forms a porous structure that has a mesopore surface area between 140 m²/g and 400 m²/g. The zeolite has a microporous crystalline structure comprising a framework of AlO₂ and SiO₂ tetrahedral units, and an empirical composition in the as synthesized and anhydrous basis expressed by the empirical formula of:

Mₘⁿ⁺R ᵣ^{p+} AlSi_{y}O_{z}.

In the formula, M is at least one exchangeable cation selected from the group consisting of alkali and alkaline earth metals, "m" is the mole ratio of M to Al and varies from 0 to 3, R is at least one organo cation selected from the group consisting of quaternary ammonium cations, diquaternary ammonium cations, quaternary phosphonium cations, and methonium cations, "r" is the mole ratio of R to Al and has a value of 0.1 to 30, "n" is the weight average valence of M and has a value of 1 to 2, "p" is the weighted average valence of R and has a value of 1 to 2, "y" is the mole ratio of Si to Al and varies from greater than 32 to 200 and "z" is the mole ratio of O to Al and has a value determined by the equation: $z = \left(m⋅n+r⋅p+3+4⋅y\right) / 2 .$

The zeolite is further characterized in that it has the x-ray diffraction pattern having at least the d spacing and intensities set forth in Table A:

**Table A**

| **2Θ** | **d(Å)** | **I/Io** |
|---|---|---|
| 7.92-7.99 | 11.04-11.31 | m |
| 8.79-8.88 | 9.94-11.09 | m |
| 20.28-20.56 | 4.31-4.35 | w |
| 23.10-23.18 | 3.83-3.84 | vs |
| 23.86-24.05 | 3.69-3.72 | m |
| 29.90-30.05 | 2.97-2.98 | w |
| 45.02-45.17 | 2.00-2.01 | w |

The zeolite can be seen as characterized by the very strong peak in the x-ray diffraction pattern at 2θ from 23.10-23.18.

In one embodiment, the zeolite can be formed with a metal E. The zeolite forms a microporous crystalline structure and has the empirical composition in the as synthesized and anhydrous basis expressed by the empirical formula of:

Mₘⁿ⁺Rᵣ^{p+} Al₁₋ₓEₓSi_{y}O_{z}

where "m" is the mole ratio of M to (Al+E) and varies from 0 to 3, "r" is the mole ratio of R to (Al+E) and has a value of 0.1 to 30, E is an element selected from the group consisting of gallium, iron, boron, indium and mixtures thereof, "x" is the mole fraction of E and has a value from 0 to 1.0, "y" is the mole ratio of Si to (Al+E) and varies from greater than 32 to 200 and "z" is the mole ratio of O to (Al+E) and has a value determined by the equation: $z = \left(m⋅n+r⋅p+3+4⋅y\right) / 2 .$

The metal M can be a mixture of alkali metals and alkaline earth metals, with a preferred metal or metal combination comprising one or more of lithium, sodium and potassium. The organo cation can comprise an organoammonium ion such as tetrabutylammonium cation, or an organophosphonium ion such as tetrabutylphosphonium cation, or a methonium ion such as hexamethonium cation. These can be selected for the reaction mixture to form the zeolite from tetrabutylammonium hydroxide, tetrabutylphosphonium hydroxide, and hexamethonium dihydroxide. The R can be selected from a mixture of quaternary organoammonium cations. The R can be a halide or a hydroxide of the organoammonium cation. A preferred R comprises a mixture of tetrabutylammonium cation and a quaternary ammonium cation.

The pentasil zeolite formed will have a silica to alumina ratio (Si/Al₂) ratio is between 32 and 400.

The pentasil-zeolite is formed by creating a reaction mixture comprising reactive compounds having M, R, Al and Si. The reaction mixture is reacted under reaction conditions that include a temperature between 80°C and 150°C, and a reaction time between 10 hours and 5 days. This forms a microporous crystalline structure comprising a framework of AlO₂ and SiO₂ tetrahedral units, and an empirical composition in the as synthesized and anhydrous basis expressed by the empirical formula of:

Mₘⁿ⁺Rᵣ^{p+} AlSi_{y}O_{z}.

The process can further include adding the additional reactive source E, wherein E is an element selected from one or more of the metals: gallium, iron, boron and indium to form the structure with the empirical composition in the as synthesized and anhydrous basis expressed by the empirical formula of:

Mₘⁿ⁺Rᵣ^{p+} Al₁₋ₓEₓSi_{y}O_{z}.

The reaction temperature is preferred to be between 100°C and 125°C, or with a preferred reaction temperature between 110°C and 150°C.

In one embodiment, the process to produce the zeolite includes forming a reaction mixture with the reactive sources of M, R, Al, and Si. The mixture is reaction at a temperature between 80°C to 150°C for a period of time of between 10 hours and 5 days and the reaction mixture has a composition expressed in terms of mole ratios of the oxides of:

aM_{2/n}O:bR_{1 2/n}O:cR_{2 2/n}:Al₂O₃:eSiO₂:hH₂O.

The reactive sources include M, a cation selected from alkali or alkaline earth elements; R an organoammonium cation; Al in the form of Al₂O₃; and Si in the form of SiO₂. In the mixture, the value of "a" is between 0.1 and 3, the value of "b" is between 1 and 30, the value of "c" is between 0 and 1, the value of "e" is between 64 and 400, and the value of "h" is between 50 and 1000.

The process can further include adding the additional reactive species E, wherein E is one or more elements from gallium, iron, boron and indium. The reaction conditions include a temperature between 85°C and 225°C for a period from 1 day to 15 days. The reaction mixture has a composition expressed in terms of mole ratios of the oxides of:

aM_{2/n}O:bR_{1 2/n}O:cR_{2 2/n}: 1-dAl₂O₃:dE₂O₃:eSiO₂:hH₂O;

wherein "a" has a value of 0.1 to 3, "b" has a value of 1 to 30, "c" has a value of 0 to 1, "d" has a value of 0 to 1, "e" has a value of 64 to 400 and "h" has a value of 50 to 1000.

### EXAMPLE 1

An aluminosilicate reaction solution was prepared by first mixing 13.15 g of aluminum tri-sec-butoxide (95⁺%), 777.62 g tetrabutylammonium hydroxide (55 mass-% solution), and 700 g of ice water mixture while stirring vigorously. After thorough mixing, 1167.98 g tetraethyl orthosilicate was added. The reaction mixture was homogenized for an additional hour with a high speed mechanical stirrer. A composite aqueous solution containing 2.75 g of NaOH dissolved in 137.7 g distilled water was added, drop-wise, to the aluminosilicate solution. After the addition was completed, the resulting reaction mixture was homogenized for 1 hour, transferred to a 2000 ml Parr stainless steel autoclave which was heated to 115°C and maintained at that temperature for 59 hrs. The solid product was recovered by centrifugation, washed with de-ionized water, and dried at 80°C.

The product was identified as a pentasil zeolite by powder x-ray diffraction. Representative diffraction lines observed for the product are shown in Table 1. The product composition was determined by elemental analysis to consist of the following mole ratios: Si/Al = 59.8, Na/Al = 0.82. A portion of the material was calcined by ramping to 560°C for 5 hours followed by an 8 hour dwell in air. The BET surface area was 697 m²/g, the micropore area was 474 m²/g, the mesopore area was 223 m²/g, the micropore volume was 0.253cc/g, and mesopore volume was 0.953 cc/g. Scanning Electron Microscopy (SEM) revealed clusters of nano spheres of less than 20 nm. Chemical analysis was as follows: 0.74% Al, 46.0% Si, and 0.52% Na, Na/Al=0.82, Si/Al₂=119.

**TABLE 1**

| 2θ | d(Å) | I/I₀% |
|---|---|---|
| 7.92 | 11.15 | m |
| 8.8 | 10.04 | m |
| 20.38 | 4.35 | w |
| 23.13 | 3.84 | vs |
| 23.98 | 3.7 | m |
| 29.96 | 2.98 | w |
| 45.14 | 2 | w |

### EXAMPLE 2

An aluminosilicate reaction solution was prepared by first mixing 13.87 g of aluminum tri-sec-butoxide (95⁺%), 386.39 g tetrabutylammonium hydroxide (55 mass-% solution), and 300 g of ice water mixture while stirring vigorously. After thorough mixing, 580.35 g tetraethyl orthosilicate was added. The reaction mixture was homogenized for an additional hour with a high speed mechanical stirrer. A composite aqueous solution containing 2.73 g of NaOH dissolved in 116.67 g distilled water was added, drop-wise, to the aluminosilicate solution. After the addition was completed, the resulting reaction mixture was homogenized for 1 hour, transferred to a 2000 ml Parr stainless steel autoclave which was heated to 115°C and maintained at that temperature for 57 hrs. The solid product was recovered by centrifugation, washed with de-ionized water, and dried at 80°C.

The product was identified as a pentasil zeolite by powder x-ray diffraction. Representative diffraction lines observed for the product are shown in Table 2. The product composition was determined by elemental analysis to consist of the following mole ratios: Si/Al = 24.9, Na/Al = 0.92. A portion of the material was calcined by ramping to 560°C for 5 hours followed by a 8 hour dwell in air. The BET surface area was 517 m²/g, the micropore area was 258 m²/g, the mesopore area was 259 m²/g, the micropore volume was 0.135 cc/g, and mesopore volume was 0.94 cc/g. Scanning Electron Microscopy (SEM) revealed clusters of nano spheres of less than 20 nm. Chemical analysis was as follows: 1.73% Al, 44.9% Si, and 1.37% Na, Na/Al=0.93, Si/Al₂=49.8.

**TABLE 2**

| 2θ | d(Å) | I/I₀% |
|---|---|---|
| 7.94 | 11.12 | m |
| 8.79 | 10.04 | m |
| 20.38 | 4.35 | w |
| 23.16 | 3.83 | vs |
| 23.86 | 3.72 | m |
| 29.96 | 2.98 | w |
| 45.07 | 2.00 | w |

### EXAMPLE 3

An aluminosilicate reaction solution was prepared by first mixing 13.73 g of aluminum tri-sec-butoxide (95⁺%), 559.89 g tetrabutylphosphonium hydroxide (40 mass-% solution), and 200 g of ice water mixture while stirring vigorously. After thorough mixing, 574.76 g tetraethyl orthosilicate was added. The reaction mixture was homogenized for an additional hour with a high speed mechanical stirrer. A composite aqueous solution containing 2.70 g of NaOH dissolved in 48.92 g distilled water, was added, drop-wise, to the aluminosilicate solution. After the addition was completed, the resulting reaction mixture was homogenized for 1 hour, transferred to a 2000 ml Parr stainless steel autoclave which was heated to 115°C and maintained at that temperature for 120 hrs. The solid product was recovered by centrifugation, washed with de-ionized water, and dried at 80°C.

The product was identified as a pentasil zeolite by powder x-ray diffraction. Representative diffraction lines observed for the product are shown in Table 3. The product composition was determined by elemental analysis to consist of the following mole ratios: Si/Al = 33.78, Na/Al = 0.67. A portion of the material was calcined by ramping to 560°C for 5 hours followed by a 8 hour dwell in air. The BET surface area was 526 m²/g, the micropore area was 220 m²/g, the mesopore area was 306 m²/g, the micropore volume was 0.115 cc/g, and mesopore volume was 0.99 cc/g. Scanning Electron Microscopy (SEM) revealed clusters of nano spheres of less than 20 nm. Chemical analysis was as follows: 1.22% Al, 42.8% Si, and 0.70% Na, Na/Al=0.67, Si/Al₂=67.5.

**TABLE 3**

| 2θ | d(Å) | I/I₀% |
|---|---|---|
| 7.99 | 11.04 | m |
| 8.88 | 9.94 | m |
| 20.50 | 4.32 | w |
| 23.16 | 3.83 | vs |
| 24.05 | 3.69 | m |
| 30.05 | 2.97 | w |
| 45.02 | 2.01 | w |

### EXAMPLE 4

An aluminosilicate reaction solution was prepared by first mixing 2.17 g of aluminum tri-sec-butoxide (95⁺%), 362.46 g tetrabutylammonium hydroxide (55 mass-% solution), and 300 g of water ice while stirring vigorously. After thorough mixing, 544.42 g tetraethyl orthosilicate was added. The reaction mixture was homogenized for an additional hour with a high speed mechanical stirrer. A composite aqueous solution containing 0.85 g of NaOH dissolved in 90.10 g distilled water was added, drop-wise, to the aluminosilicate solution. After the addition was completed, the resulting reaction mixture was homogenized for 1 hour, transferred to a 2000 ml Parr stainless steel autoclave which was heated to 115°C and maintained at that temperature for 48 hrs. The solid product was recovered by centrifugation, washed with de-ionized water, and dried at 80°C.

The product was identified as a pentasil zeolite by powder x-ray diffraction. Representative diffraction lines observed for the product are shown in Table 4. The product composition was determined by elemental analysis to consist of the following mole ratios: Si/Al = 202, Na/Al = 1.33. A portion of the material was calcined by ramping to 560°C for 5 hours followed by an 8 hour dwell in air. The BET surface area was 567 m²/g, the micropore area was 206 m²/g, the mesopore area was 361 m²/g, the micropore volume was 0.11cc/g, and mesopore volume was 0.92 cc/g. Scanning Electron Microscopy (SEM) revealed clusters of nano spheres of less than 20 nm. Chemical analysis was as follows: 0.22% Al, 46.2% Si, and 0.22% Na, Na/Al=1.33, Si/Al₂=404.

**TABLE 4**

| 2θ | d(Å) | I/I₀% |
|---|---|---|
| 7.98 | 11.07 | m |
| 8.88 | 9.94 | m |
| 23.20 | 3.83 | vs |
| 24.06 | 3.69 | m |
| 29.9 | 2.98 | w |
| 45.22 | 2.00 | w |

While the invention has been described with what are presently considered the preferred embodiments, it is to be understood that the invention is not limited to the disclosed embodiments, but it is intended to cover various modifications included within the scope of the appended claims.

## Claims

1. A pentasil-layered zeolite having a microporous crystalline structure comprising a framework of AlO₂ and SiO₂ tetrahedral units, and an empirical composition in the as synthesized and anhydrous basis expressed by the empirical formula of:
Mₘⁿ⁺R ᵣ^{p+}AlSi_{y}O_{z}
where M is at least one exchangeable cation selected from the group consisting of alkali and alkaline earth metals, "m" is the mole ratio of M to Al and varies from 0 to 3, R is at least one organo cation selected from the group consisting of quaternary ammonium cations, diquaternary ammonium cations, quaternary phosphonium cations, and methonium cations, "r" is the mole ratio of R to Al and has a value of 0.1 to 30, "n" is the weight average valence of M and has a value of 1 to 2, "p" is the weighted average valence of R and has a value of 1 to 2, "y" is the mole ratio of Si to Al and varies from greater than 32 to 200 and "z" is the mole ratio of O to Al and has a value determined by the equation: $z = \left(m⋅n+r⋅p+3+4⋅y\right) / 2 ;$
wherein the zeolite , after calcination by ramping at 560°C for 5 hours followed by an 8 hours dwell in air, forms a porous structure that has a mesopore surface area between 140 m²/g and 400 m²/g,;
wherein the zeolite is further **characterized by** the x-ray diffraction pattern having at least the d spacing and intensities set forth in the following Table A:
**Table A**
| **2Θ** | **d(Å)** | **I/Io** |
|---|---|---|
| 7.92-7.99 | 11.04-11.31 | m |
| 8.79-8.88 | 9.94-11.09 | m |
| 20.28-20.56 | 4.31-4.35 | w |
| 23.10-23.18 | 3.83-3.84 | vs |
| 23.86-24.05 | 3.69-3.72 | m |
| 29.90-30.05 | 2.97-2.98 | w |
| 45.02-45.17 | 2.00-2.01 | w |

2. The zeolite of claim 1 wherein the zeolite has a microporous crystalline structure comprising a framework of AlO₂ and SiO₂ tetrahedral units, further including the element E and having the empirical composition in the as synthesized and anhydrous basis expressed by the empirical formula of:
Mₘⁿ⁺Rᵣ^{p+} Al₁₋ₓEₓSi_{y}O_{z}
where "m" is the mole ratio of M to (A1+E) and varies from 0 to 3, "r" is the mole ratio of R to (A1+E) and has a value between 0.1 and 30, E is an element selected from the group consisting of gallium, iron, boron, indium and mixtures thereof, "x" is the mole fraction of E and has a value from 0 to 1.0, "y" is the mole ratio of Si to (A1+E) and varies from greater than 32 to 200 and "z" is the mole ratio of O to (A1+E) and has a value determined by the equation: $z = \left(m⋅n+r⋅p+3+4⋅y\right) / 2 .$

3. The zeolite of claim 1 wherein M is selected from the group consisting of lithium, sodium, potassium, and mixtures thereof.

4. The zeolite of claim 1 wherein M is a mixture of an alkali metal and an alkaline earth metal.

5. The zeolite of claim 1 wherein R is selected from the group consisting of tetrabutylammonium hydroxide, tetrabutylphosphonium hydroxide, hexamethonium dihydroxide and mixtures thereof.

6. The zeolite of claim 1 wherein R is a halide or hydroxide compound of an organoammonium cation.

7. The zeolite of claim 1 wherein R is a mixture of tetrabutylammonium cation and a quaternary ammonium cation.

8. The zeolite of claim 1 wherein the silica/alumina (Si/Al₂) ratio is between 32 and 400.

## Patentansprüche

1. Pentasil-geschichteter Zeolith mit einer mikroporösen kristallinen Struktur, umfassend ein Gerüst aus tetraedrischen AlO₂- und SiO₂-Einheiten, und eine empirische Zusammensetzung auf synthetischer und wasserfreier Basis, ausgedrückt durch die empirische Formel:
Mₘⁿ⁺Rᵣ^{p+}AlSi_{y}O_{z}
wobei M mindestens ein austauschbares Kation ist, ausgewählt aus der Gruppe bestehend aus Alkali- und Erdalkalimetallen, "m" das Molverhältnis von M zu Al ist und von 0 bis 3 variiert, R mindestens ein Organokation ist, ausgewählt aus der Gruppe bestehend aus quaternären Ammoniumkationen, diquaternären Ammoniumkationen, quaternären Phosphoniumkationen und Methoniumkationen, "r" das Molverhältnis von R zu Al ist und einen Wert von 0,1 bis 30 aufweist, "n" die gewichtete durchschnittliche Valenz von M ist und einen Wert von 1 bis 2 aufweist, "p" die gewichtete durchschnittliche Valenz von R ist und einen Wert von 1 bis 2 aufweist, "y" das Molverhältnis von Si zu Al ist und von größer als 32 bis 200 variiert und "z" das Molverhältnis von O zu Al ist und einen Wert aufweist, der durch die folgende Gleichung bestimmt wird: $z = \left(m⋅n+r⋅p+3+4⋅y\right) / 2 ;$
wobei der Zeolith nach einer Kalzinierung durch Ramping auf 560 °C für 5 Stunden, gefolgt von einer 8-stündigen Verweildauer an der Luft, eine poröse Struktur bildet, die eine Mesoporenoberfläche zwischen 140 m²/g und 400 m²/g aufweist;
wobei der Zeolith ferner **gekennzeichnet ist durch** ein Röntgendiffraktionsmuster, das mindestens die d-Abstände und Intensitäten aufweist, die in der folgenden Tabelle A angegeben sind:
**Tabelle A**
| **2Θ** | **d(Å)** | **I/Io** |
|---|---|---|
| 7,92-7,99 | 11,04-11,31 | m |
| 8,79-8,88 | 9,94-11,09 | m |
| 20,28-20,56 | 4,31-4,35 | w |
| 23,10-23,18 | 3,83-3,84 | vs |
| 23,86-24,05 | 3,69-3,72 | m |
| 29,90-30,05 | 2,97-2,98 | w |
| 45,02-45,17 | 2,00-2,01 | w |

2. Zeolith nach Anspruch 1, wobei der Zeolith eine mikroporöse kristalline Struktur aufweist, umfassend ein Gerüst aus tetraedrischen AlO₂- und SiO₂-Einheiten, ferner das Element E einschließt und die empirische Zusammensetzung auf synthetisierter und wasserfreier Basis aufweist, ausgedrückt durch die empirische Formel:
Mₘⁿ⁺Rᵣ^{p+}Al₁₋ₓEₓSi_{y}O_{z}
wobei "m" das Molverhältnis von M zu (Al+E) ist und von 0 bis 3 variiert, "r" das Molverhältnis von R zu (Al+E) ist und einen Wert zwischen 0,1 und 30 aufweist, E ein Element ist, ausgewählt aus der Gruppe bestehend aus Gallium, Eisen, Bor, Indium und Mischungen davon, "x" der Molenbruch von E ist und einen Wert von 0 bis 1,0 aufweist, "y" das Molverhältnis von Si zu (Al+E) ist und von größer als 32 bis 200 variiert und "z" das Molverhältnis von O zu (Al+E) ist und einen Wert aufweist, der durch die folgende Gleichung bestimmt wird: $z = \left(m⋅n+r⋅p+3+4⋅y\right) / 2 .$

3. Zeolith nach Anspruch 1, wobei M ausgewählt ist aus der Gruppe bestehend aus Lithium, Natrium, Kalium und Mischungen davon.

4. Zeolith nach Anspruch 1, wobei M eine Mischung aus einem Alkalimetall und einem Erdalkalimetall ist.

5. Zeolith nach Anspruch 1, wobei R ausgewählt ist aus der Gruppe bestehend aus Tetrabutylammoniumhydroxid, Tetrabutylphosphoniumhydroxid, Hexamethoniumdihydroxid und Mischungen davon.

6. Zeolith nach Anspruch 1, wobei R eine Halogenid- oder Hydroxidverbindung eines Organoammoniumkations ist.

7. Zeolith nach Anspruch 1, wobei R eine Mischung aus einem Tetrabutylammoniumkation und einem quaternären Ammoniumkation ist.

8. Zeolith nach Anspruch 1, wobei das Siliziumdioxid/Aluminiumoxid-Verhältnis (Si/Al₂) zwischen 32 und 400 liegt.

## Revendications

1. Zéolite lamellaire de type pentasil ayant une structure cristalline microporeuse comprenant un réseau d'unités tétraédriques d'AlO₂ et de SiO₂, et une composition empirique dans la base telle que synthétisée et anhydre exprimée par la formule empirique de :
Mₘⁿ⁺Rᵣ^{p+}AlSi_{y}O_{z}
où M est au moins un cation échangeable sélectionné dans le groupe consistant en métaux alcalins et alcalino-terreux, « m » est le rapport molaire de M sur Al et varie de 0 à 3, R est au moins un cation organique sélectionné dans le groupe consistant en cations d'ammonium quaternaire, cations d'ammonium diquaternaire, cations de phosphonium quaternaire et cations de méthonium, « r » est le rapport molaire de R sur Al et a une valeur de 0,1 à 30, « n » est la valence moyenne en poids de M et a une valeur de 1 à 2, « p » est la valence moyenne pondérée de R et a une valeur de 1 à 2, « y » est le rapport molaire de Si sur Al et varie de plus de 32 à 200 et « z » est le rapport molaire de O sur Al et a une valeur déterminée par l'équation : $z = \left(m⋅n+r⋅p+3+4⋅y\right) / 2 ;$
dans laquelle la zéolite, après calcination par montée à 560 °C pendant 5 heures, suivie par un maintien de 8 heures dans l'air, forme une structure poreuse qui a une surface mésoporeuse comprise entre 140 m²/g et 400 m²/g ;
dans laquelle la zéolite est en outre **caractérisée par** le diagramme de diffraction des rayons X ayant au moins l'espacement d et des intensités présentées dans le Tableau A suivant :
**Tableau A**
| **2Θ** | **d(Å)** | **I/Io** |
|---|---|---|
| 7,92-7,99 | 11,04-11,31 | m |
| 8,79-8,88 | 9,94-11,09 | m |
| 20,28-20,56 | 4,31-4,35 | w |
| 23,10-23,18 | 3,83-3,84 | vs |
| 23,86-24,05 | 3,69-3,72 | m |
| 29,90-30,05 | 2,97-2,98 | w |
| 45,02-45,17 | 2,00-2,01 | w |

2. Zéolite selon la revendication 1, dans laquelle la zéolite a une structure cristalline microporeuse comprenant un réseau d'unités tétraédriques d'AlO₂ et de SiO₂, incluant en outre l'élément E et ayant la composition empirique dans la base telle que synthétisée et anhydre exprimée par la formule empirique de :
Mₘⁿ⁺Rᵣ^{p+}Al₁₋ₓEₓSi_{y}O_{z}
où « m » est le rapport molaire de M sur (Al+E) et varie de 0 à 3, « r » est le rapport molaire de R sur (Al+E) et a une valeur comprise entre 0,1 et 30, E est un élément sélectionné dans le groupe consistant en gallium, fer, bore, indium et mélanges de ceux-ci, « x » est la fraction molaire de E et a une valeur de 0 à 1,0, « y » est le rapport molaire de Si sur (Al+E) et varie de plus de 32 à 200 et « z » est le rapport molaire de O sur (Al+E) et a une valeur déterminée par l'équation : $z = \left(m⋅n+r⋅p+3+4⋅y\right) / 2 .$

3. Zéolite selon la revendication 1, dans laquelle M est sélectionné dans le groupe consistant en lithium, sodium, potassium et mélanges de ceux-ci.

4. Zéolite selon la revendication 1, dans laquelle M est un mélange d'un métal alcalin et d'un métal alcalino-terreux.

5. Zéolite selon la revendication 1, dans laquelle R est sélectionné dans le groupe consistant en hydroxyde de tétrabutylammonium, hydroxyde de tétrabutylphosphonium, dihydroxyde d'hexaméthonium et mélanges de ceux-ci.

6. Zéolite selon la revendication 1, dans laquelle R est un halogénure ou un composé d'hydroxyde d'un cation d'organoammonium.

7. Zéolite selon la revendication 1, dans laquelle R est un mélange d'un cation de tétrabutylammonium et d'un cation d'ammonium quaternaire.

8. Zéolite selon la revendication 1, dans laquelle le rapport silice/alumine (Si/Al₂) est compris entre 32 et 400.
